Europäisches Patentamt

European Patent Office

Office européen des brevets

(19)

(11) Publication number: **0 228 725**
**A1**

(12) **EUROPEAN PATENT APPLICATION**

(21) Application number: **86202054.2**

(22) Date of filing: **20.11.86**

(51) Int. Cl.⁴: **B 65 G 15/34**

(30) Priority: **02.12.85 BE 1011389**

(43) Date of publication of application:
**15.07.87 Bulletin 87/29**

(84) Designated Contracting States:
**BE DE ES FR GB IT LU NL**

(71) Applicant: **N.V. BEKAERT S.A.**
**Bekaertstraat 2**
**B-8550 Zwevegem(BE)**

(72) Inventor: **Verbauwhede, Germain**
**Kanaalstraat 84**
**B-8550 Zwevegem(BE)**

(72) Inventor: **Vanassche, Roger**
**Paul Ferrardstraat 8d**
**B-8550 Zwevegem(BE)**

(74) Representative: **Ryckeboer, Leo et al,**
**c/o N.V. BEKAERT S.A. Department Industrial Property**
**Leo Bekaertstraat 2**
**B-8550 Zwevegem(BE)**

(54) **A woven fabric to increase the stiffness of an elastomeric belt and the elastomeric belt thus obtained.**

(57) Open-mesh woven fabric (1) to increase the stiffness of an elastomeric belt in which it is embedded, comprising steel cords (4) in the weft and thread-like elements (3) in the warp, whereby the weft cords (4) are coated with a stiff plastic layer (5), the surface of which has a capacity to adhere to the surrounding elastomer. Applications, eg. in conveyor belts, and processes for creating an adhesive capacity in or on the plastic coating (5) are also covered.

FIG.1

EP 0 228 725 A1

Croydon Printing Company Ltd.

## A WOVEN FABRIC TO INCREASE THE STIFFNESS OF AN ELASTOMERIC BELT AND THE ELASTOMERIC BELT THUS OBTAINED

The invention relates to a woven open-mesh fabric to increase the stiffness of an elastomeric belt or sheet in which it is embedded, and the elastomeric belt thus obtained. The woven fabric comprises steel cords as the weft and thread-like elements as the warp. The elastomeric belt can be used as a conveyor belt or driving belt or as a hose or container wall.

Stiffening conveyor belts transversally by embedding fabrics with relatively stiff weft threads and more flexible warp threads has been described in the DE patent 2.519.448. Similar woven fabrics are applied according to DE 2.425.465 to improve the resistance of a conveyor belt to longitudinal incisions. Similar woven fabrics are also described in the French patents 2.161.856 and 2.323.601.

In practice, these stiffening fabrics are required to meet more and more exacting demands. In addition to an optimal stiffening effect and greater resistance to longitudinal incisions, effective resistance to corrosion and impact loading is wanted more and more, plus excellent bonding to a wide range of elastomer compositions. Indeed the composition of the elastomers is selected as function of the operating requirements, for example, durable resistance to aggressive and corrosive environments, high temperatures and extreme fluctuations in temperature; good abrasion resistance etc. To meet these performance requirements elastomer compositions often have to be selected which offer only poor, or less than optimal bonding to the stiffening and reinforcing structures to be embedded in it.

An object of the present invention is to provide stiffening fabrics which produce optimal stiffening of the elastomeric belt at a minimum of added weight, whereby the open-mesh woven fabric has a stable dimensional structure and which gives a uniform stiffening effect over the whole surface of the elastomeric belt. The weft and preferably also the warp elements should also offer suitable elasticity and tensile strength properties to provide adequate impact strength. In addition, the stiffening structure must have an outstanding corrosion resistance, coupled with an ability to bond to the widest possible range of elastomer compositions such as for example : EDPM, nitrile, neoprene and chloroprene rubber, SBR, butyl and natural rubber, polyurethanes, PVC, etc. Finally, the elastomeric belt must have a high degree of resistance to incisions perpendicular to the weft cords.

The present invention offers a solution to these problems by providing an open-mesh woven fabric with steel cords in the weft and thread-like elements in the warp. "Thread-like elements" in this context means threads in general, such as for example metal, carbon, glass or plastic monofilaments, yarn, multifilaments and strands. One of the main characteristics of the invention is the coating of the weft cords with a rigid plastic, the surface of which bonds very well to the surrounding elastomer, once it has been incorporated in the elastomeric belt to be stiffened. An elastomeric belt to be stiffened in only one direction shall comprise at least one such fabric. If more than one stiffening fabrics are used, all weft cords of the said fabrics in the belt should be parallel. This elastomeric belt can of course also be provided with an additional reinforcing structure.

Some embodiments of the woven fabric and of the elastomeric belt stiffened therewith will now be described, in conjunction with the accompanying drawings. Further features of the invention will thereby be clarified.

Figure 1 is a perspective view of a stiffening fabric according to the invention.

Figure 2 shows a cross-section of a coated weft cord in an elastomeric matix.

Figure 3 shows a cross-section of an elastomeric belt containing two stiffening fabrics.

Figure 4 represents a cross-section of an elastomeric belt comprising a reinforcing structure in addition to one or more stiffening fabrics.

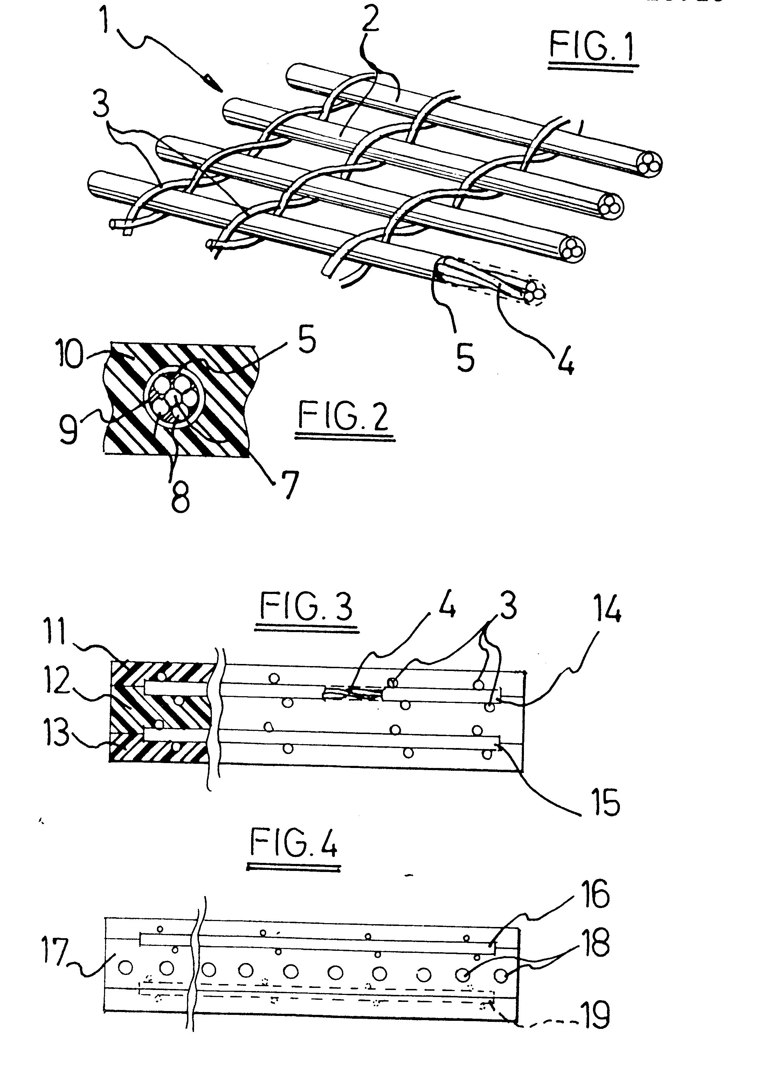

The open-mesh stiffening fabric 1 according to figure 1 comprises a number of relatively stiff weft elements 2 which are fixed in a dimensionally stable pattern in relation to each other by means of thread type warp elements 3. The weft elements 2 are made of steel cords 4 which are coated with a rigid or stiff plastic layer 5. The thread-type warp elements 3, made of a synthetic material for example, are arranged in pairs whereby the threads of each pair cross each other between the weft cords, and an appropriate distance is maintained between successive pairs. According to the invention, the plastic coating 5, and preferably also the warp elements 3, have an ability to bond to the elastomeric material in which the fabric is to be embedded.

To obtain an optimal stiffening effect, the coated steel cords must offer strong resistance to axial compression, i.e. they must have a high axial compression modulus. The plastic coating contributes substantially hereto and in proportion to the stiffness of the plastic used and the degree to which it can penetrate between the cord filaments. The cord design and construction or structure will also influence the stiffening effect. A longer lay length (e.g. more than 12 times the cord diameter) and the presence of a more or less straight core filament or core strands in the cord will usually increase its stiffness. Cords with a core of types 1 + n or 1 + p $^{+q}$ or 2 + m or 3 + m are to be preferred for this reason. As further illustrated in the examples, the application of thicker core filaments will allow radial penetration of the plastic coating deep into the cord structure, which will prevent core migration (axial shift of the core filament). Moreover, cords with a core and concentric strand sheathing layer or layers often have a fairly round circumference, which greatly facilitates the application of an even plastic coating by extrusion. An even coating or a uniformly round cord will produce a uniform stiffening effect over the whole length of the cord, and reduce its tendency to buckle under axial compression (particularly in longitudinal sections where the covering layer is thinner or more irregular). The covered cord will perform as one integral body, which will postpone the incidence of buckling under compression. This measure therefore guarantees a more uniform stiffening effect.

However, if a compromise is required between a certain degree of stiffness and a good impact strength in the stiffened elastomeric belt or impact damping therein, it can be useful to coat steel cord structures having a greater degree of extensibility, eg. so-called elongation cords such as the 3x7 type, or cords with a synthetic fibre in the core. An alternative is the use of plastic coated cords of no significant extensibility (eg. cords with a core filament surrounded by an enclosing layer of filaments) coated with a softer, elastic layer which thus permits some axial displacement of the coated cord in the surrounding elastomeric belt. This is represented schematically in figure 2. The cord 4 with core filament 7 and a surrounding layer of filaments consisting of five filaments (i.e. a 1+5 structure) is first coated with a stiff plastic 5, then with an elastic intermediate layer 9 before being embedded in the elastomeric belt 10. Figure 2 also gives a clear picture of the penetration of the plastic 5 between the filaments 8 against the surface of the core filament 7. Similar penetration will always be achieved for example when, with a 1+6 structure, the diameter of the core filament 7 is greater than that of the surrounding filaments 8.

The stiff plastic may in principle be any plastic which adheres adequately to the surface of the steel cord (after prior treatment of the latter if necessary), and which will not soften unduly during vulcanization (or polymerization) of the elastomer in which it is embedded. Thermoplastic nylon and polyester are very suitable and can be applied to the cord in a known continuous extrusion process. If required, and where possible, the composition of the plastic shall be formulated to combine a good degree of stiffness with an intrinsic (latent) capacity to adhere both to the cord surface and to the elastomer or elastomers with which it will come into contact.

However, in some cases it will be difficult to achieve an adequate adhesive capacity in the plastic coating 5 to both the surface of the steel cord and the elastomers 10. For this reason, the invention also includes the activation or treatment of the surface of the plastic coating with a layer of a more or less universal adhesive. The necessity for this is clearly illustrated for the case of an elastomeric belt as shown in figure 3.

It is known that effective transverse stiffening of elastomeric belts, such as eg. conveyor belts, can be achieved by introducing transverse cords into the belt, either in the top or bottom layer of the belt. According to the embodiment illustrated in figure 3, such an elastomeric belt comprises a central elastomeric layer 12 (made of eg. a natural rubber/SBR mixture) which is sandwiched between fabrics 14 and 15 according to the present invention. Each fabric is then covered with an outer elastomeric layer 11 and 13 respectively (made of eg. EPDM rubber). The layers 11, 12 and 13 will usually differ from each other in composition. To prevent delamination occuring in the interface between these layers, exellent adhesion will be required between these various elastomers and also with the fabrics 14 and 15, inter alia. For this reason, stiffening fabrics with a more or less universal and durable adhesion capacity are greatly to be preferred.

Various adhesives, including both heat activatable and other glues, can be used to achieve an effective bond between plastic coating and elastomer. A solution of halogenated polymers to which a cross-linking agent has been added has proved to be particularly effective.

The invention also covers a number of processes for the application of the plastic coating to a steel substrate, whereby this coating must also have an ability to adhere to the elastomer to which it is to be bonded at a later stage. Preferably, the plastic coated substrates such as threads or cords should be warm when brought into contact with the above-mentioned solution, by dip-coating, for example. The solvent evaporates and the coated substrate cools off at the same time, so that a very thin film of the adhesive is deposited on the substrate, which film will form a strong bond with the surrounding elastomer during vulcanization of the latter in the manufacture of the belt. A preferred embodiment of this process is described in the example given below. It was also found that under certain process conditions a certain amount of the adhesive can penetrate radially through the plastic coating layer, eg. as deep as the outer circumference segments of the steel cord filaments. In the case of the above-mentioned halogenated polymers, an extended bond can be achieved in this way from the steel cord interface, right through the plastic coating layer to the surrounding elastomer. The plastic coating layer hereby attains an intrinsic and practically universal adhesive capacity. Instead of the plastic coated cords, the fabric containing these cords can in principle be dipped while warm in and passed through the above-mentioned solution.

The intrinsic adhesive capacity can be enhanced or alternatively achieved by coating or covering the polymer granulate (to be hot worked and extruded on to the steel cords) with the heat activatable adhesives prior to extrusion, eg. during or immediately after granulation. When these coated granules are hot worked and extruded on to the steel cord, a labyrinthine distribution of the universal adhesive throughout the plastic coating mass is achieved. If necessary, this method of promoting adhesion can be combined with the application of an additional coating of heat activatable adhesive on to the already intrinsically modified plastic coating layer around the steel cord.

In addition to increasing the stiffness adequately, the protective plastic coating also substantially increases the corrosion resistance of the embedded steel cords. Even if galvanized steel filaments are used to improve corrosion resistance, the plastic coating is still useful. This is an additional, significant advantage. The plastic coating layers also help to keep the weft cords straight as they are inserted, during the weaving process and thereafter : weaving with uncoated steel cords sometimes presents problems. The weft cords must then also be cut off at the required fabric width. The plastic coating effectively prevents flair of the cut ends of the cords. Plastic coated steel threads (round or rectangular monofilaments) are also more difficult to weave straight as weft elements. In addition to the above-mentioned advantages, the combination of steel cord with plastic coating also offers optimal flexibility, which means that this combination is also greatly preferable from the weaving point of view.

The warp threads 2, 3 (made of eg. polyester or nylon monofilaments or multifilaments) serve, inter alia, to ensure the dimensional stability of the fabric with a pre-set weft spacing usually between 2 mm and 10 mm. However, they can also provide a certain degree of longitudinal reinforcement (perpendicular to the stiffening effect) in the elastomeric belt, and can therefore also be chosen as a function of the longitudinal reinforcement requirements. The warp elements will preferably have a breaking strength of between 150 N and 3000 N. If required, they can be coated (hot or cold) with the adhesion enhancing material by means of a continuous dipping process. One of the main objects of the invention, i.e. the achievement of maximum stiffening for a minimum weight of the fabric often means in practice that the weight of steel in the mat will be between 500 $g/m^2$ and 4000 $g/m^2$ for the above-mentioned spacing of the weft elements.

Transverse stiffening is particularly important for passenger belts, elevator belts (with sloping and/or vertical trajects), conveyor belts for bulk goods transport systems driven by guide cables, and for dust seat belts.

For conventional conveyor belts with longitudinal reinforcement, in addition to a certain amount of transverse stiffe-

- 9 -

0228725

ning, a substantial increase in resistance to longitudinal incisions and improved impact strength is also frequently desirable. Figure 4 is a cross-section drawing of a belt of this type in which an additional longitudinal reinforcement structure in the form of a parallel arrangement of reinforcement cords 18 has been embedded in the central elastomer layer 17. The stiffening fabrics (16) can be added on top of the longitudinal reinforcement and if required, also underneath the said reinforcements (fabric 19 shown in dotted lines). If necessary, the weft cords in fabric 19 may be elongation cords or cords enclosed in a softer layer 9 as shown in figure 2, since when the conveyor belt is loaded and therefore troughs, fabric 19 is subject to tensile strain. Elongation cords can also be used for the weft of fabric 15 (figure 3) if required. It is of course also possible to embed fabrics 14 and/or 15 (or 16 and/or 19) centrally in an elastomeric belt, after which the belts are sandwiched between the layers 11, 12 and 13 respectively. Fabrics 14 or 16 can also be embedded in a belt 11 and/ or fabrics 15 or 19 can be centrally embedded in a belt 13.

When used in trapezoidal or V-shaped driving belts, the transversal stiffening by means of the fabrics according to the invention contributes to the resistance of the belt to lateral compression between the sides of the V-shaped groove in the circumference of the pulleys. This contributes to the maintenance of a correct speed.

In addition to fabrics as shown in figure 1, fabrics can also be used of the type illustrated in applicant's European Patent Application 0 002 299 and 0 096 929 in which the steel weft cords have a stiff plastic coating with a capacity to adhere to the surrounding elastomer, as described above. As a result of the presence of steel cords in the warp of these fabrics, not only a transverse stiffening effect but also a substantial longitudinal reinforcement is thereby obtained. The plastic coating on the weft cords will also lead to improved corrosion resistance.

Example

A number of stiffening fabrics were made according to the invention, in the conventional way. Their performance was compared with that of similar stiffening fabrics in which the weft cords were not coated with a stiff, highly adhesive plastic as required according to the present invention.

Galvanized steel cords were used for the weft cords, and nylon monofilaments with a diameter of 0.9 mm for the warp. The distance between adjacent pairs of warp filaments was approximately 9 mm, while the weft spacing was set at 5.7 mm. Two fabrics were embedded in a 15 mm thick elastomeric belt (see figure 3), each halfway between an outer surface and the central plane of symmetry, so that the distance between the fabrics was 7.5 mm. The stiffness performance of this belt was determined by means of three-point bending tests. In this test, the belt was placed on two parallel horizontal supporting rollers 736 mm apart, whereby the weft cords were at right angles to the axis of the said rollers. The relative stiffness values are set out for comparison in table 1. The stiffness values are based on the measurement of bending moduli. The diameter of a galvanized steel cord 0.47 + 6 x 0.45 is 1.37 mm.

Table 1

| Weft structure | 3x0.60 | (3x0.60) + 1 | 3x0.60 Nyl | 4x0.60 | 3x0.70 | 0.47 + 6x 0.45 Nyl |
|---|---|---|---|---|---|---|
| Relative stiffness | 100 | 96 | 110 | 105 | 118 | 126 |
| Cord diameter(mm) | 1.29 | 1.60 | 1.47 | 1.44 | 1.50 | 1.47 |
| Weight of steel in fabric $(g/m^2)$ | 1190 | 1201 | 1179 | 1539 | 1581 | 1495 |
| Relative stiffness per unit of weight | 0.0840 | 0.0799 | 0.0932 | 0.0682 | 0.0746 | 0.0842 |

From this table it can be seen that the fabric with nylon coated weft cords "3 x 0.60 Nyl" shows the highest stiffness value per unit of weight of steel in the fabric, although it contains no core filament, unlike the 0.47 + 6 x 0.45 Nyl structure. This is undoubtedly due to two factors : in the first place, the filament diameter (0.60 mm) is relatively large (which enhances the stiffness) and in the second place, the amount of nylon coating applied to the cord per metre is significantly greater in the 3 x 0.60 structure. Moreover, the nylon is more or less equally divided over three zones along the circumference of the cord, which is likely to produce a more efficient blockage of the cord filaments than in the 0.47 + 6 x 0.45 Nyl structure, whereby a smaller amount of nylon has to be spread over six filament blocking zones. The selection of a thicker core filament would improve the stiffness value of the 1 + 6 structure. However, the 3 x 1 structures entail a great disadvantage in that they take up a relatively larger amount of nylon (hence become more expensive) and moreover that they leave a central opening in the cord, whereby the cord is far more susceptible to or easily damaged by corrosion. A high corrosion resistance is, however, an important object of the invention, which means that cord structures with a central opening must be avoided. Furthermore, a 3 x 1 structure is less round than a 1 + 6 structure, and therefore also more difficult to coat evenly with plastic.

In addition to its stiffening function, the nylon coating also performs an equally essential function in permitting an adhesive bond to be made between the steel cord and as wide a range of elastomers as possible in the surrounding elastomeric layers. The 3 x 0.60 Nyl and 0.47 + 6 x 0.45 Nyl cords were coated in the usual manner by hot extrusion, and the warm, coated cord was then directly fed through a bath of the adhesive to be applied comprising a 50 vol % solution of Chemosil (a registered trademark of Henkel) in toluene. Chemosil contains halogenated polymers and a cross linking agent. The adhesive solution was recycled and maintained at a constant level by continuous addition of fresh solution and was passed through a heat exchanger for cooling ; the solvent vapour was extracted continually. The fact that the adhesive solution comes into contact with the nylon while it is still warm and soft promotes bonding between the two, so that a highly adhesive and very thin surface coating is obtained with a universal adhesive capacity which is activated during assembly with the various types of elastomer and during vulcanization or polymerization.

The invention is not restricted to the embodiments described above. In particular, the manufacture of steel cords could be envisaged whereby at least one of the composing filaments, wires or strands and/or groups of wires or strands are given a plastic coating with the said specific adhesive capacity, and are then incorporated into fabrics if required.

CLAIMS

1. Open-mesh woven fabric (1) for increasing the stiffness of an elastomeric belt in which it is embedded, comprising steel cords (4) in the weft and thread-like elements (2, 3) in the warp, characterized in that the weft cords (4) are coated with a stiff plastic layer (5), the surface of which has a capacity to adhere to the surrounding elastomer.

2. Fabric according to claim 1 whereby the thread-like elements in the warp are made of plastic and wherein the weight of steel in the fabric is between 500 $g/m^2$ and 4000 $g/m^2$ while the weft spacing is between 2 mm and 10 mm.

3. Fabric according to claim 1 whereby the thread-like elements in the warp are steel cords.

4. Fabric according to claim 1 whereby the plastic coating (5) consists of nylon.

5. Fabric according to claim 1 whereby the plastic coating (5) has a surface layer promoting adhesion based on halogenated polymers to which a cross linking agent has been added.

6. Elastomeric belt with increased stiffness in one direction comprising at least one fabric according to one of the above claims whereby all weft cords in the belt are parallel.

7. Elastomeric belt according to claim 6 whereby it contains a central elastomeric layer (12) which is covered on both sides with a fabric (14) and (15) respectively and whereby each fabric is further covered with an outer elastomeric layer (11) and (13) respectively.

8. Elastomeric belt according to claim 6 whereby an additional reinforcement structure is incorporated into the aforesaid belt.

9. Elastomeric belt according to claim 7 whereby an additional longitudinal reinforcement structure has been incorporated in the central elastomeric layer.

10. Process for the coating of a substrate with a layer of plastic, the surface of which has a capacity to adhere to elastomers characterized in that the plastic coated substrate is brought into contact while warm with a solution of a heat activatable adhesive, and whereby the plastic cools on contact, thereby leaving a thin surface film of the adhesive on the plastic coating.

11. Process for coating a substrate with a layer of plastic with an intrinsic capacity to adhere to the said substrate and to elastomers, characterized in that the plastic granulate is coated with a hot activatable adhesive and whereby the thus coated granules are hot worked and extruded on to the substrate.

12. Process according to claim 11 whereby the plastic coated substrate, immediately after coating and while still warm, is brought into contact with a solution of heat activatable adhesive, whereby it cools and a thin surface film of the adhesive is deposited on the plastic coating.

0228725

## FIG.1

## FIG.2

## FIG.3

## FIG.4

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | FR-A-2 242 496 (N.V. BEKAERT S.A.) <br> * Page 2, lines 24-31; figure * | 1-2 | B 65 G 15/34 |
| Y | FR-A-2 265 638 (CAROLINA STEEL & WIRE CORP.) <br> * Page 6, lines 28-38; page 8, lines 12-17; figure 6 * | 1-2 | |
| A | | 3-5,8-9,10 | |
| A | AU-B- 50 207 (CONTINENTAL GUMMI-WERKE AG)(1979) | | |
| A | DE-B-1 134 024 (CONTINENTAL GUMMI-WERKE AG) | | TECHNICAL FIELDS SEARCHED (Int. Cl 4) |
| D,A | FR-A-2 323 601 (K. HARTMANN) | | B 65 G <br> D 03 D |
| D,A | FR-A-2 161 856 (J. BERTE) | | |
| D,A | DE-B-2 519 448 (CONRAD SCHOLTZ AG) | | |
| | --- -/- | | |

The present search report has been drawn up for all claims

| Place of search | Date of completion of the search | Examiner |
|---|---|---|
| THE HAGUE | 26-02-1987 | NEHRDICH H.J |

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| D,A | DE-B-2 425 465 (CLOUTH GUMMIWERKE AG) | | |
| D,A | EP-A-0 002 299 (N.V. BEKAERT S.A.) | | |
| D,A | EP-A-0 096 929 (N.V. BEKAERT S.A.) | | |

--- 

TECHNICAL FIELDS
SEARCHED (Int Cl.4)

The present search report has been drawn up for all claims

| Place of search | Date of completion of the search | Examiner |
|---|---|---|
| THE HAGUE | 26-02-1987 | NEHRDICH H.J |